# EUROPEAN PATENT SPECIFICATION

(11) **EP 4 396 265 B1**
(45) Date of publication and mention of the grant of the patent: **29.01.2025**
(21) Application number: 22768381.0
(22) Date of filing: 22.08.2022
(51) Int. Cl.: C08G 63/91, C10L 1/238, C09K 8/035, C09K 8/524, C08G 63/06, C08G 63/48, C10L 1/198, C10L 10/16, C08K 5/01, C08L 91/06

(54) **HYPERBRANCHED POLYESTERS MODIFIED WITH BRANCHED FATTY ACIDS AND THEIR USE AS PARAFFIN INHIBITORS**
MIT VERZWEIGTEN FETTSÄUREN MODIFIZIERTE HYPERVERZWEIGTE POLYESTER UND DEREN VERWENDUNG ALS PARAFFININHIBITOREN
POLYESTERS HYPERBRANCHÉS MODIFIÉS AVEC DES ACIDES GRAS RAMIFIÉS ET LEUR UTILISATION EN TANT QU'INHIBITEURS DE PARAFFINE

(30) Priority: 30.08.2021 EP 21193760
(43) Date of publication of application: 10.07.2024
(73) Proprietor: BASF SE, 67056 Ludwigshafen am Rhein (DE)
(72) Inventor: WOLF, Elena, 67056 Ludwigshafen (DE); LAFUENTE CERDA, Oscar, 83308 Trostberg (DE)
(74) Representative: BASF IP Association
(86) International application number: PCT/EP2022/073281
(87) International publication number: WO 2023/030939

(56) References cited:
- WO-A1-2006/056578
- WO-A1-2016/073574
- WO-A1-2020/231994
- WO-A1-96/12755
- US-A1- 2008 207 871
- US-A1- 2008 274 149
- PORTELA V. MUNOZ ET AL: "High-Pressure Phase Behavior of the System Propane-Boltorn H3200", JOURNAL OF CHEMICAL AND ENGINEERING DATA., vol. 54, no. 9, 10 September 2009 (2009-09-10), US, pages 2593 - 2598, XP055893857, ISSN: 0021-9568, DOI: 10.1021/je900130y

## Description

The invention relates to hydrophobically modified, hyperbranched polyester obtainable by a 2-step process of reacting a mixture comprising at least a polyol comprising at least 3 hydroxy groups and a monomer comprising one carboxylic acid group and at least two hydroxy groups, thereby obtaining a hyperbranched polyester comprising terminal hydroxy groups and at least partly esterifying the terminal hydroxy groups with a mixture of carboxylic acids comprising at least linear saturated aliphatic carboxylic acids groups and branched saturated aliphatic carboxylic acids groups. The invention furthermore relates to formulations comprising hydrocarbons and such polyesters and to the use of such hydrophobically modified, hyperbranched polyesters or formulations thereof, as pour-point depressant or wax inhibitor for crude oil.

Subterranean mineral oil formations typically have relatively high temperatures. After the production of the crude oil to the surface, the crude oil produced therefore cools down to a greater or lesser degree depending on the production temperature and the storage or transport conditions.

According to their origin, crude oils have different proportions of waxes, which consist essentially of long-chain n-paraffins. According to the type of crude oil, the proportion of such paraffins may typically be 1 to 30% by weight of the crude oil. When the temperature goes below a particular level in the course of cooling, the paraffins can crystallize, typically in the form of platelets. The precipitated paraffins considerably impair the flowability of the oil. The platelet-shaped n-paraffin crystals can form a kind of house-of-cards structure which encloses the crude oil, such that the crude oil ceases to flow, even though the predominant portion is still liquid. The lowest temperature at which a sample of an oil still just flows in the course of cooling is referred to as the pour point ("yield point"). For the measurement of the pour point, standardized test methods are used. Precipitated paraffins can block filters, pumps, pipelines and other installations or be deposited in tanks, thus entailing a high level of cleaning.

The deposit temperature of oil deposits is generally above room temperature, for example 40°C to 100°C. Crude oil is produced from such deposits while still warm, and it naturally cools more or less quickly to room temperature in the course of or after production, or else to lower temperatures under corresponding climatic conditions. Crude oils may have pour points above room temperature, such that crude oils of this kind may solidify in the course of or after production.

It is known that the pour point of crude oils can be lowered by suitable additives. This can prevent paraffins from precipitating in the course of cooling of produced crude oil. Suitable additives firstly prevent the formation of said house-of-cards-like structures and thus lower the temperature at which the crude oil solidifies. In addition, additives can promote the formation of fine, well-crystallized, non-agglomerating paraffin crystals, such that undisrupted oil transport is ensured. Such additives are also referred to as pour point depressants or flow improvers.

Paraffin inhibitors or wax inhibitors refer to those substances intended to prevent the deposition of paraffins or paraffin waxes on surfaces in contact with crude oils or other wax-containing oils and/or mineral oil products.

One class of chemical compounds which have been suggested as pour point depressants, wax inhibitors, or cold flow improvers comprises dendritic or hyperbranched polymers or derivatives thereof.

WO 96/12755 A1 describes an oil-soluble dendrimer-based cold-flow improver comprising an amine based central core linked through a plurality of polar groups to a dendritic body which is linked through a plurality of polar groups to a hydrocarbyl periphery consisting of n-alkyl groups from 8 to 1000 carbon atoms.

Alan R. Katritzky et al., Journal of the Chinese Chemical Society, 1997, 44, 575 - 580 describe the synthesis of dendramines and dendramides and their application in the oil industry in particular as wax-inhibitors.

EP 1 557 411 A2 describes a nucleating agent on basis of hyperbranched polymers comprising a hyperbranched core to which C₈ to C₄₀ alkyl chains are linked via ester-, carbonate-, thioether-, amide-, urethane-, urea-, or -CO-CH₂CH₂-NR'-groups. The nucleating agent may be used for improving the cold-flow properties of paraffin containing crude oils, fuels, oils, lubricants or in fat-based fuels.

WO 2006/056578 A1 describes a method for improving the flowability of a mixture that contains wax and other hydrocarbons which comprises adding a hyperbranched polyester amide.

WO 2013/019704 A1 discloses a hydrocarbon flow improver comprising a branched dendritic core having at least 16 terminal hydroxyl groups and wherein at least one of the terminal hydroxyl groups is esterified with at least one carboxylic acid moiety comprising from 6 to 30 carbon atoms. The dendritic core comprises a quaternary carbon center. The document furthermore relates to a method of extracting hydrocarbon fluid from a well comprising the step of adding said fluid improver to the hydrocarbon fluid. WO 2015/070121 A1 discloses the use of the same product as asphaltene inhibitor.

Khadid I. Kabel et al., Research on Chemical Intermediates, 2015, 41 (1), 457-474, describe the synthesis and evaluation of PAMAM dendrimer and PDPF-b-POP block copolymer as asphaltene inhibitor/dispersant.

WO 2019/185401 A1 discloses modified hyperbranched polyesters and their use as wax inhibitor or as pour point depressant. The hyperbranched polyesters are synthesized in a 2-step reaction. In a first step, a hyperbranched polyester core is synthesized which comprises terminal OH-groups. In a second step, the terminal OH-groups are reacted with hydrophobic carboxylic acids, thereby obtaining a modified hyperbranched polyester comprising terminal hydrophobic groups. Suitable carboxylic acids preferably have the formula R-COOH, wherein R is a hydrocarbon moiety having at least 6, preferably at least 10 carbon atoms. The hydrocarbon groups may be linear saturated or linear unsaturated hydrocarbon groups or branched saturated or branched unsaturated hydrocarbon groups. It has also been suggested to use a mixture of linear, saturated aliphatic hydrocarbon groups with linear, aliphatic unsaturated hydrocarbon groups or a mixture of linear, saturated aliphatic hydrocarbon groups with branched, saturated aliphatic hydrocarbon groups.

WO 2020/231994 A1 discloses a method of adding a flow improver to petroleum fluids comprising a solvent and a dendrimer-based flow improver wherein the dendrimer core is modified with a mixture of saturated and unsaturated fatty acids. A mixture of saturated and unsaturated fatty acids yields products having a lower viscosity at low temperatures as compared to products for which only saturated fatty acids are used.

US 2008/274149 A1 discloses microparticles from a polymer blend of hyperbranched, fatty-acid-modified polyesters, wherein one fatty-acid-modified polyester is obtained by esterifying 90% of the hydroxy groups of the commercially available hyperbranched polyester with a mixture of arachic acid and behenic acid in a mass ratio of 2:3.

US 2008/207871 A1 discloses a hydrophilic hyperbranched polyester hydrophobized by esterifying 90% of the hydroxyl groups of the hydrophilic polymer with a mixture of eicosanoic acid and behenic acid in a mass ratio of 2:3.

Th. W. de Loos et al., JOURNAL OF CHEMICAL AND ENGINEERING DATA, 2009, 54(9), 2593-2598, describes a hydroxyl-functional hyperbranched polyester whose OH-end groups are functionalized with a mixture of eicosanoic and docosanoic acid.

WO 2016/073574 A1 discloses a branched polymer, which serves as an asphaltene dispersant, a pour point depressant, a biocide, a wax inhibitor, wherein the branched polymer can be a dendritic polymer based on polyester polyol, which can be functionalized with fatty acids such as palmitic add, stearic acid or behenic acid.

WO 96/12755 A1 discloses an oil soluble dendrimer-based cold flow improver comprising a central core linked through a plurality of polar groups to a dendritic body, which is linked through a plurality of polar groups to a hydrocarbyl periphery, the hydrocarbyl periphery consisting of n-alkyl groups which contain from 8 to 1000 carbon atoms.

Accordingly, the present invention relates to hydrophobically modified, hyperbranched polyesters, obtainable by the following process:
(a) reacting a mixture comprising at least a polyol (A) comprising at least 3 hydroxy groups and a molecule (B) comprising one carboxylic acid group and at least two hydroxy groups, by heating the mixture to a temperature of at least 100°C, wherein the molar ratio (B) : (A) is from 1000 : 1 to 10 : 1, thereby obtaining a hyperbranched polyester comprising terminal hydroxy groups; and
(b) Reacting the mixture obtained in course of step (a) with a mixture of monocarboxylic acids (D) by heating to a temperature of at least 100°C, thereby esterifying at least a part of the terminal OH-groups of the polyester obtained in course of step (a), wherein the monocarboxylic acids (D) comprise
   (D1) at least one linear, saturated aliphatic carboxylic acid, wherein at least one of the carboxylic acids (D1) comprises at least 20 carbon atoms, and
   (D2) at least one branched, saturated aliphatic carboxylic acid (D2) comprising at least 4 carbon atoms,
   wherein the molar ratio (D1) : (D2) is from 1 : 2 to 15 : 1.

The invention furthermore relates to formulations comprising at least a hydrocarbon or a mixture of different hydrocarbons having a boiling point of at least 100°C, and a hydrophobically modified, hyperbranched polyester as described above.

Furthermore, the invention relates to the use of such hydrophobically modified, hyperbranched polyesters or formulations thereof, as pour-point depressant or wax inhibitor for crude oil.

**Figures:**

| | |
|---|---|
| Figure 1 | Schematic representation of the structure of a hyperbranched polymer. |
| Figure 2 | Summary of pour-point measurements in crude oil |

With regard to the invention, the following can be stated specifically:

### Hydrophobically modified, hyperbranched polyesters

The hydrophobically modified, hyperbranched polyesters according to the present invention are obtainable by a 2-step process comprising at least the process steps (a) and (b). In step (a), a hyperbranched polyester comprising terminal hydroxy groups is synthesized. In the second step (b), the terminal hydroxy groups are at least partly esterified with a mixture comprising linear and branched carboxylic acids, thereby obtaining a hydrophobically modified, hyperbranched polyester. The hydrophobically modified, hyperbranched polyesters are soluble in hydrocarbons. In an optional step (c), the hydrophobically modified, hyperbranched polyesters are dissolved in hydrocarbons or mixtures of hydrocarbons.

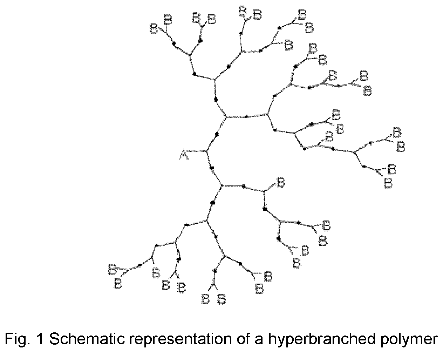

The term "hyperbranched" is well known to the skilled artisan. Regarding the definition of dendrimeric and hyperbranched polymers in general see for example P. J. Flory, J. Am. Chem. Soc., 1952, 74, 2718 and H. Frey et al., Chem. Eur. J., 2000, 6 (14), 2499. Hyperbranched polyesters have a high degree of branches and may be synthesized by using as monomers XYₙ molecules comprising a carboxy group X and n, preferably 2 hydroxy groups Y. More details may be found for example in WO 2019/185401 A1, page 13, line 25 to page 14, line 30. A schematic representation of a hyperbranched polymer can be found in figure 1.

### Step (a)

In course of step (a) a mixture comprising at least a polyol (A) comprising at least 3 hydroxy groups and a molecule (B) comprising one carboxylic acid group and at least two hydroxy groups is reacted by heating the mixture to a temperature of at least 100°C, thereby obtaining a hyperbranched polyester comprising terminal hydroxy groups. Optionally, a diol (C) having a molecular weight of at least 100 g/mol may be present in the mixture. Of course, further monomers besides (A), (B), and optionally (C) may be used.

The polyol (A) comprises at least 3 hydroxy groups. In one embodiment, the number of hydroxy groups is from 3 to 6, in particular 3 to 5. In one embodiment, the polyol comprises 3 hydroxy groups. It is preferred that the polyol (A) does not contain functional groups other than hydroxyl groups.

Examples of suitable polyols (A) comprise glycerol, butane-1,2,4-triol, n-pentane-1,2,5-triol, n-pentane-1,3,5-triol, n-hexane-1,2,6-triol, n-hexane-1,2,5-triol, n-hexane-1,3,6-triol, trimethylolbutane, trimethylolpropane or di-trimethylolpropane, trimethylolethane, pentaerythritol or dipentaerythritol; sugar alcohols such as mesoerythritol, threitol, sorbitol, mannitol. Furthermore, alkoxylated, in particular ethoxylated, derivates of the polyols (A) mentioned above may be used. Of course, mixtures of two or more than two different polyols (A) may be used.

In one embodiment of the invention, the polyols (A) are selected from the group of glycerol, trimethylolpropane, trimethylolethane and pentaerythritol or the respective ethoxylated derivatives. In one embodiment, trimethylolpropane is used.

The monomer (B) comprises one carboxylic acid group and at least two hydroxy groups. The number of hydroxy groups may in particular be 2 to 4, preferably 2 or 3. In one embodiment of the invention, the monomer (B) comprises one carboxylic acid group and two hydroxy groups. The monomers (B) may have further functional groups but it is preferred that no functional groups are present apart from carboxylic acid and hydroxyl groups.

Examples of monomers (B) comprise 2,2,2-tris(hydroxymethyl)acetic acid, 2,3-dihydroxypropionic acid, sugar acids such as gluconic acid, glucaric acid, glucuronic acid, galacturonic acid or mucic acid (galactaric acid), 2,4-, 2,6-, or 3,5-dihydroxybenzoic acid, 4,4-bis(4-hydroxyphenyl)valeric acid, 2,2-bis(hydroxymethyl)alkane-carboxylic acids such as for example 2,2-bis(hydroxymethyl)propionic acid (dimethylolpropionic acid), 2,2-bis(hydroxymethyl)butyric acid (dimethylolbutyric acid) and 2,2-bis(hydroxymethyl)valeric acid, preferably 2,2-bis(hydroxymethyl)propionic acid (dimethylolpropionic acid) or 2,2-bis(hydroxymethyl) butyric acid (dimethylolbutyric acid). In one embodiment of the invention, the monomers (B) are selected from 2,2-bis(hydroxymethyl)butyric acid (dimethylolbutyric acid) and 2,2-dihydroxymethylpropionic acid (dimethylolpropionic acid). In one preferred embodiment, dimethylolpropionic acid is used as monomer (B).

The monomers (B) may be used as free carboxylic acids or in the form of salts, as ammonium or alkali metal salts. Furthermore, also activated derivatives of the carboxylic acid group may be used, such as for example anhydrides or acid chlorides. However, it is preferred that the carboxylic acids are used as such.

In one embodiment of the invention, besides the components (A) and (B) also a diol (C) having a molecular weight of at least 100 g/mol is present. The diol is characterized in that it has two hydroxyl groups, preferably in the form of -CH₂-OH. The diol (C) functions as a chain extender. The number average molecular weight Mₙ preferably is at least 500 g/mol, for example in the range from 500 to 5000 g/mol.

Examples of diols (C) comprise 1,ω-diols such as 1,6-hexanediol, 1,8-octanediol or cyclohexanediols. Preferably, polyether diols, such as for example diethylene glycol, triethylene glycol, dipropylene glycol, tripropylene glycol, polyethylene glycols HO(CH₂CH₂O)ₙ-H, polypropylene glycols HO(CH[CH₃]CH₂O)ₙ-H, polyTHF HO-[(CH₂)₄-O]ₙ-H, n being an integer with a value adjusted to meet the molecular weight of the polymer may be used. Of course, mixtures of two or more than two different diols (C) may be used. In one embodiment of the invention, the diols (C) are selected from the group of polyethylene glycol, polypropylene glycol and polyTHF, in particular those having an Mₙ of 500 to 5000 g/mol, preferably from 1000 to 5000 g/mol.

According to the invention, the molar ratio of the components (B) : (A) is from 1000:1 to 10:1., i.e. (B), preferably from 700:1 to 50:1, or from 300:1 to 100:1.

If a diol (C) is present, the molar ratio (B) : (C) also is in the range is from 1000:1 to 10:1, more preferably 700:1 to 25:1, or from 500:1 to 50:1.

Step (a) is carried out by mixing the components (A), (B), optionally (C) and further components and heating them to a temperature of at least 100°C. The reaction temperature should not exceed 200°C. In one embodiment, the reaction temperature is from 100°C to 200°C, preferably from 120°C to 180°C, or from 140°C to 170°C. In certain embodiments, the reaction temperature may be slowly raised to said temperatures.

The reaction may preferably be carried out using the mixture as such, i.e. without adding a solvent. In other embodiments, step (a) may be carried out in a suitable solvent. Examples comprise hydrocarbons such as paraffins or aromatics, such as for example toluene, ortho-xylene, meta-xylene, para-xylene, xylene isomer mixture, ethylbenzene, chlorobenzene and ortho- and meta-dichlorobenzene.

In course of reacting the components (A), (B), and optionally (C) water is formed which should be removed from the reaction mixture. In one embodiment of the invention, water is distilled off from the reaction mixture. For the purpose of removing water, the pressure may be reduced, for example to 50 to 500 hPa. In other embodiments, water-removing additives may be added before and/or during the reaction. Examples of water-removing additives include molecular sieves, particularly molecular sieve 4 Ȧ, MgSO₄ and Na₂SO₄.

In one embodiment of the invention, the reaction is carried out in the presence of a catalyst for esterification. Examples of suitable catalysts comprise acids sulfuric acid, phosphoric acid, phosphonic acid, hypo phosphorous acid, aluminum sulfate hydrate, alum, acidic silica gel and acidic alumina, or organic acids such as para-toluenesulfonic acid, or methane sulfonic acid. Further examples comprise aluminum compounds of the general formula Al(OR)₃ and titanates of the general formula Ti(OR)₄, wherein R are alkyl or cycloalkyl moieties, such as for example isopropyl. Also, organometallic catalysts may be used, for example dialkyltin oxides R₂SnO, where R are alkyl or cycloalkyl moieties, in particular di-n-butyltin oxide. Of course, also combinations of catalysts may be used. In one embodiment, methane sulfonic acid is used as catalyst. The amount of catalysts used -if present- may be from 0.01 to 5 % by weight, preferably from 0.1 to 2 % by weight, more preferably 0.2 to 1% by weight, each based on the total amount of the reactants.

The reaction time of the method of the invention is usually from 10 minutes to 48 hours, preferably from 30 minutes to 24 hours and more preferably from 1 to 16 hours. The reaction may be monitored by measuring the acid value of the products formed. In one embodiment, the acid number of the hyperbranched polyesters comprising terminal hydroxy groups obtained in course of step (a) is from 10 bis 26 mg KOH/g.

After the end of the reaction of step (a), the hyperbranched polyesters comprising terminal hydroxy groups can be isolated easily, for example, by removing the catalyst by filtration and concentrating the filtrate, usually under reduced pressure. Further highly suitable workup methods include precipitation following the addition of water and subsequent washing and drying. However, it is preferred that step (b) is carried out directly, without said isolating steps.

Preferred hyperbranched polyesters comprising terminal hydroxy groups available in step (a) comprise polyesters comprising components (A), (B), and (C), wherein the polyols (A) are selected from the group of glycerol, trimethylolpropane, trimethylolethane and pentaerythritol, the monomers (B) are selected from dimethylolbutyric acid and dihydroxymethylpropionic acid, and the diol (C) is polyethylene glycol or poly propylene glycol.

### Step (b)

In course of step (b), the mixture obtained in course of step (a) is reacted with a mixture of monocarboxylic acids (D) by heating to a temperature of at least 100°C, thereby esterifying at least a part of the terminal OH-groups of the polyester obtained in course of step (a), thereby obtaining a hydrophobically modified, hyperbranched polyester.

Preferably, at least 30 % of the terminal OH groups are esterified by means of carboxylic acids, more preferably at least 50 % and more preferably at least 75 %.

For modifying the product of step (a), a mixture comprising at least two different carboxylic acids is used. The monocarboxylic acids (D) comprise
(D1) at least one linear, saturated aliphatic carboxylic acid, wherein at least one of the carboxylic acids (D1) comprises at least 20 carbon atoms, and
(D2) at least one branched, saturated aliphatic carboxylic acid (D2) comprising at least 4 carbon atoms,
wherein the molar ratio (D1) : (D2) is from 1 : 2 to 15 : 1, in particular 1:1 to 15 : 1, preferably from 1 : 1 to 12 : 1.

Commercially available linear, saturated aliphatic carboxylic acids are often fatty acids derived from naturally occurring fats and oil and typically are mixtures comprising two or more than two different carboxylic acids.

According to the invention the linear, saturated aliphatic carboxylic acid(s) comprise at least one linear, saturated aliphatic carboxylic acid comprising at least 20 carbon atoms, in particular from 20 to 36 carbon atoms or from 20 to 30 carbon atoms. Examples of suitable comprise arachidic acid (C20), behenic acid (C22), tetracosanoic acid (C24), cerotic acid (C26), or triacontanoic acid (C30).

Preferably, the linear, saturated aliphatic carboxylic acid(s) comprise at least one linear, saturated aliphatic carboxylic acid comprising at least 22 carbon atoms, in particular from 22 to 36 carbon atoms or from 22 to 30 carbon atoms.

In one embodiment of the invention, the amounts of carboxylic acids (D1) comprising at least 20 carbon atoms is at least 30 % by weight, preferably at least 50 % by weight, for example at least 70 % by weight, relating to the total of all carboxylic acids (D1), and in one embodiment all of the carboxylic acids (D1) comprise at least 20 carbon atoms.

In another embodiment of the invention, the amounts of carboxylic acids (D1) comprising at least 22 carbon atoms is at least 30 % by weight, preferably at least 50 % by weight, for example at least 70 % by weight, relating to the total of all carboxylic acids (D1), and in one embodiment all of the carboxylic acids (D1) comprise at least 22 carbon atoms.

In one embodiment of the invention, the carboxylic acids (D1) comprise a mixture of carboxylic acids having 20, 22, and 24 carbon atoms, all together preferably in amount of at least 50 % by weight, more preferably at least 70 % by weight, relating to the total of all carboxylic acids (D1).

Linear, saturated aliphatic carboxylic acids (D1) having less than 20 carbon atoms which may be present besides the carboxylic acid(s) having at least 20 carbon atoms should comprise at least 12 carbon atoms, preferably at least 14 carbon atoms and more preferably at least 16 carbon atoms. Examples comprise stearic acid (C18), palmitic acid (C16), and myristic acid (C14).

In one embodiment of the invention, the carboxylic acids (D1) comprise a mixture of carboxylic acids having 16, 18, 20, and 22 carbon atoms, wherein the amounts of carboxylic acids (D1) comprising at least 20 carbon atoms is at least 50 % by weight, for example at least 70 % by weight, relating to the total of all carboxylic acids (D1).

The branched, saturated aliphatic carboxylic acid(s) (D2) comprise at least 4 carbon atoms, for example from 4 to 36 carbon atoms. Preferably, the branched carboxylic acid(s) (D2) comprise at least 12 carbon atoms, in particular 12 to 36, preferably 12 to 30 or from 12 to 20 carbon atoms. Examples comprise isostearic acid (C18), isolauric acid (C12), isomyristic acid (C14), isopalmitic acid (C16), 14-methylhexadecanoic acid (C16), 2,6,10,14-tetramethylpentadecanoic acid (C16, Pristanic acid), 3,7,11,15-Tetramethylhexadecanoic acid (C 16, Phytanic acid), isoarachidic acid (C20) 19-methyleicosanoic acid (C20), 18-methyleicosanoic acid (C20), isobehenic acid (C22). In one embodiment of the invention, isostearic acid is used as carboxylic acid (D2).

Besides the carboxylic acids (D1) and (D2) also carboxylic acids (D3) different from (D1) and (D2) may be present. However, their amount should not exceed 30 mol %, preferably not 20 mol % regarding to the total of all carboxylic acids (D), and more preferably no other carboxylic acids than (D1) and (D2) are present. Examples of such carboxylic acids (D3) include linear, aliphatic and unsaturated carboxylic acids such as oleic acid.

The carboxylic acids (D) may be used as free carboxylic acids or in the form of salts, as ammonium or alkali metal salts. Furthermore, also activated derivatives of the carboxylic acid group may be used, such as for example anhydrides or acid chlorides. However, it is preferred that the carboxylic acids are used as such.

Step (b) is carried out by mixing the carboxylic acids (D) with the mixture obtained in course of step (a) and heating them to a temperature of at least 100°C. The reaction temperature should not exceed 200°C. In one embodiment, the reaction temperature is from 100°C to 200°C, preferably from 120°C to 180°C, or from 140°C to 170°C. In certain embodiments, the reaction temperature may be slowly raised to said temperatures. Preferably, the reaction in step (b) is carried out under reduced pressure.

Step (b) may be carried out in the presence of a suitable esterification catalyst. Suitable catalysts have already been mentioned above. Methane sulfonic acid is a preferred catalyst.

In one embodiment of the invention, the monocarboxylic acids (D) comprise
(D1) at least one linear, saturated aliphatic carboxylic acid, wherein at least one of the carboxylic acids (D1) comprises at least 20 carbon atoms, and the amounts of carboxylic acids (D1) comprising at least 20 carbon atoms is at least 50 % by weight, relating to the total of all carboxylic acids (D1), and
(D2) at least one branched, saturated aliphatic carboxylic acid (D2) comprising at least 12 to 20, for example 14 to 20 carbon atoms,
wherein the molar ratio (D1) : (D2) is from 1 : 1 to 15 : 1, preferably from 1 : 1 to 12 : 1, for example from 5:1 to 15:1.

### Step (c)

The hydrophobically modified, hyperbranched polyesters may be used as such. In another embodiment, they are used as a formulation in hydrocarbons.

Therefore, in one embodiment of the invention, the process comprises an additional step (c) comprising the dissolution of hydrophobically modified, hyperbranched polyesters obtained in course of step (b) in a hydrocarbon or a mixture of different hydrocarbons having a boiling point of at least 100°C.

Hydrocarbons or hydrocarbon mixtures may be aliphatic, naphthenic or aromatic hydrocarbons. The boiling point is at least 100°C, for example at least 120°C, preferably at least 150°C. Preferably, the hydrocarbons used have a flashpoint of at least 60°C. In particular, technical mixtures of hydrocarbons may be used. Technical mixtures of saturated aliphatic solvents are commercially available, for example technical mixtures of the Shellsol^{®} D series and Exxsol^{®} D series. Technical mixtures of aromatic solvents are also commercially available, for example the Shellsol^{®} A series or the Solvesso^{®} series or Caromax^{®} series.

The dissolution can be simply carried out for example by mixing the components while stirring.

The concentration of the hydrophobically modified, hyperbranched polyesters in the formulation usually is at least 10 %, for example at least 20 % by weight, in particular at least 30 % by weight of polymers relation to the total of the formulation. The concentration may be for example from 10 to 80 % by weight. In other embodiments, the concentration is from 30 bis 80 % by weight or from 30 to 55 % by weight.

In one embodiment, the present invention relates to a formulation of polyesters comprising at least
- a hydrocarbon or a mixture of different hydrocarbons having a boiling point of at least 100°C, and
- a hydrophobically modified, hyperbranched polyester as described above.

Preferred hydrocarbons and concentrations have already been mentioned above.

### Hydrophobically modified, hyperbranched polyesters

The synthesis yields hydrophobically modified, hyperbranched polyesters comprising a core of a hyperbranched polyester and terminal hydrophobic groups formed by means of the carboxylic acids (D1) and (D2).

As will be shown in detail in the experimental part, substituting a part of the linear, saturated, aliphatic carboxylic acids by branched, saturated, aliphatic carboxylic acids decreases the melting point of the hydrophobically modified, hyperbranched polyesters according to the present invention as such as well as the melting point of solutions of the polymers in high-boiling hydrocarbons. The hydrophobically modified, hyperbranched polyesters are therefore suitable for making winterized formulations, i.e. formulations which are still liquid at low temperatures. It is important to note, that the presence of at least one linear, aliphatic, carboxylic acid comprising at least 20 carbon atoms is required to ensure the function as pour point depressant or wax inhibitor. When only linear carboxylic acids comprising less than 20 carbon atoms, for example C16 and C18 carboxylic acids are used, the effect of lowering the melting point by substituting a part of the linear carboxylic acids by branched carboxylic acids is also observed, however, the polymers no longer function as pour point depressants.

In one embodiment of the invention, the number average molecular mass Mₙ of hydrophobically modified, hyperbranched polyesters is from 5,000 g/mol to 7,500 g/mol, and the weight average molecular mass is from 10,000 to 20,000 g/mol.

In certain embodiments of the invention, the acid number of the modified, hyperbranched polyesters is from 5 bis 25 mg KOH/g, for example from 10 to 20 mg KOH/g.

### Process for making hydrophobically modified, hyperbranched polyesters

In one embodiment, the present invention relates to a process for making hydrophobically modified, hyperbranched polyesters, wherein the process comprises at least the following steps:
(a) Reacting a mixture comprising at least a polyol (A) comprising at least 3 hydroxy groups and a molecule (B) comprising one carboxylic acid group and at least two hydroxy groups, by heating the mixture to a temperature of at least 100°C, wherein the molar ratio (B) : (A) is from 1000 : 1 to 10 : 1, thereby obtaining a hyperbranched polyester comprising terminal hydroxy groups; and
(b) Reacting the mixture obtained in course of step (a) with a mixture of monocarboxylic acids (D) by heating to a temperature of at least 100°C, thereby esterifying at least a part of the terminal OH-groups of the polyester obtained in course of step (a), wherein the monocarboxylic acids (D) comprise
   (D1) at least one linear, saturated aliphatic carboxylic acid, wherein at least one of the carboxylic acids (D1) comprises at least 20 carbon atoms, and
   (D2) at least one branched, saturated aliphatic carboxylic acid (D2) comprising at least 4 carbon atoms,
   wherein the molar ratio (D1) : (D2) is from 1 : 2 to 15 : 1.

Details of the process, including preferred embodiments have already been described above and we refer to the respective passages above.

### Use of hydrophobically modified, hyperbranched polyesters

### Use as pour point depressant

In one embodiment of the invention, the hydrophobically modified, hyperbranched polyesters of the present invention are used as pour point depressants for crude oil, by adding at least one of the hydrophobically modified, hyperbranched polyesters detailed above to the crude oil.

Pour point depressants reduce the pour point of crude oils. The pour point ("yield point") refers to the lowest temperature at which a sample of an oil, in the course of cooling, still just flows. For the measurement of the pour point, standardized test methods are used.

For use as pour point depressant, the polymer may be added as such, however preferably a formulation of polyesters comprising at least
- a hydrocarbon or a mixture of different hydrocarbons having a boiling point of at least 100°C, and
- a hydrophobically modified, hyperbranched polyester as described above.

Details, including preferred embodiments have already been mentioned above.

The formulation may comprise further components. For example, additional wax dispersants can be added to the formulation. Wax dispersants stabilize paraffin crystals which have formed and prevent them from sedimenting. The wax dispersants used may, for example, be alkylphenols, alkylphenol-formaldehyde resins or dodecylbenzenesulfonic acid.

The formulations may furthermore comprise other paraffin inhibitors such as for example ethylene-vinylacetate copolymers, polyacrylate-based paraffin inhibitors or paraffin inhibitors based on maleic acid anhydride - olefine copolymers.

The hydrophobically modified, hyperbranched polyesters or formulations thereof are typically used in such an amount that the amount of the hydrophobically modified, hyperbranched polyesters added is 50 to 3,000 ppm based on the crude oil. The amount is preferably 100 to 1,500 ppm, for example, 300 to 1,000 ppm. The amounts are based on the hydrophobically modified, hyperbranched polyesters themselves, not including any solvents present and optional further components of the formulation.

### Use as wax inhibitor

In another embodiment of the invention, the above-detailed hydrophobically modified, hyperbranched polyesters, are used to prevent wax deposits on surfaces in contact with crude oil. The use is effectuated by adding at least one of the above-detailed hydrophobically modified, hyperbranched polyesters to the crude oil.

Preferred formulations and concentrations of use have already been mentioned above.

In a preferred embodiment of the invention, the oil is crude oil and the formulation is injected into a crude oil pipeline. The injection can preferably be effectuated at the oilfield, i.e. at the start of the crude oil pipeline, but the injection can of course also be effectuated at another site. More particularly, the pipeline may be one leading onshore from an offshore platform, especially when the pipelines are in cold water, for example having a water temperature of less than 10°C, i.e. the pipelines have cold surfaces.

In a further embodiment of the invention, the formulation is injected into a production well. Here too, the production well may especially be a production well leading to an offshore platform. The injection is preferably effectuated approximately at the site where oil from the formation flows into the production well. In this way, the deposition of paraffins on surfaces can be prevented.

For use as wax inhibitor, the hydrophobically modified, hyperbranched polyesters or formulations thereof are typically used in such an amount that the amount of the hydrophobically modified, hyperbranched polyesters added is 20 to 1,000 ppm based on the crude oil. The amount is for example from 50 pp to 200 ppm. The amounts are based on the hydrophobically modified, hyperbranched polyesters themselves, not including any solvents present and optional further components of the formulation.

The invention is illustrated in detail by the examples which follow.

The following chemicals were used for synthesizing the modified, hyperbranched polyesters:

| | |
|---|---|
| Wilfarin^{®} SA-1865 | Commercially available mixture of linear, saturated C_{16/18} fatty acids, |
| | ~ 30 to 33 % by weight C₁₆ and ~ 65 - 69 % by weight C₁₈ |
| Palmera^{®} A8522 | Commercially available mixture comprising linear, saturated C₂₂ fatty acid (Behenic acid), ~ 85 % by weight C₂₂, minor amount of C₂₀ |
| Palmera^{®} BLC50 | Commercially available mixture of linear, saturated C₁₆₋₂₂ fatty acids, |
| | ~ 4 to 15 % by weight C₁₆ and ~ 29 to 40 % by weight C₁₈, |
| | ~ 50 to 65 % by weight C₂₀ + C₂₂ |
| Prisorine^{®} 3505 | Isostearic acid |
| Pluriol^{®} P 4000 | Poly(propyleneglycol), Mₙ ~ 4000 g/mol |
| DMPA | Dimethylolpropionic acid |

### Comparative Example 1

Synthesis of a hyperbranched polyester, modified with a linear C16/C18 carboxylic acid

### Step 1: Synthesis of the hyperbranched polyester core

0.94 g trimethylolpropane (0.0070 mol), 187.7 g dimethylolpropionic acid (1.4 mol), 37.4 g (0.0093 mol) of polypropylenglycole having an M_{w} of 4000 g/mol (Pluriol^{®} P4000) and 0.72 g methanesulfonic acid (0.0075 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 26 mg KOH/g was reached.

### Step 2: Modification with a linear C16/C18 carboxylic acid

331.8 g (1.2 mol) of a linear C16/18 carboxylic acid (Wilfarin^{®} SA-1865) was added to the reaction mixture. The reaction mixture was kept at 160 °C under reduced pressure until an acid number of 15 mg KOH/g was obtained. The overall reaction time is 7 hours.

The analytical data of the product obtained are summarized in table 1.

### Comparative Example 2

Synthesis of a hyperbranched polyester, modified with a linear C22 carboxylic acid

### Step 1: Synthesis of the hyperbranched polyester core

1.88 g trimethylolpropane (0.014 mol), 375.5 g dimethylolpropionic acid (2.8 mol), 74.7 g (0.0187 mol) of polypropylenglycole having an M_{w} of 4000 g/mol (Pluriol^{®} P4000) and 1.44 g methanesulfonic acid (0.015 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 24 mg KOH/g was reached.

### Step 2: Modification with a linear C22 carboxylic acid

801.6 g (2.4 mol) of a C22 carboxylic acid (Palmera^{®} A8522) was added to the reaction mixture. The reaction mixture was kept at 160 °C under reduced pressure until an acid number of 14 mg KOH/g was obtained. The overall reaction time is 9 hours.

The analytical data of the product obtained are summarized in table 1.

### Comparative Example 3

Synthesis of a hyperbranched polyester, modified with a mixture of C16 to C22 carboxylic acids

### Step 1: Synthesis of the hyperbranched polyester core

1.88 g trimethylolpropane (0.014 mol), 375.5 g dimethylolpropionic acid (2.8 mol), 74.7 g (0.0187 mol) polypropylenglycole having an M_{w} of 4000 g/mol (Pluriol^{®} P4000) and 1.44 g methanesulfonic acid (0.015 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 20 mg KOH/g was reached.

### Step 2: Modification with a mixture of linear C16 to C22 carboxylic acids

732 g (2.4 mol) of a mixture of linear C16 to C22 carboxylic acids (Palmera^{®} BLC50) was added to the reaction mixture. The reaction mixture was kept at 160 °C under reduced pressure until an acid number of 13 mg KOH/g was obtained. The overall reaction time is 9 hours.

The analytical data of the product obtained are summarized in table 1.

### Comparative example 4

Synthesis of a hyperbranched polyester, modified with a branched C18 carboxylic acid

### Step 1: Synthesis of the hyperbranched polyester core

0.94 g trimethylolpropane (0.0070 mol), 187.7 g dimethylolpropionic acid (1.4 mol), 37.4 g (0.0093 mol) polypropylenglycole having an M_{w} of 4000 g/mol (Pluriol^{®} P4000) and 0.72 g methanesulfonic acid (0.0075 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 22 mg KOH/g was reached.

### Step 2: Modification with a branched C18 carboxylic acid

350.6 g (1.2 mol) of a branched C18 carboxylic acid (isostearic acid, Prisorine^{®} 3505) were added to the reaction mixture. The reaction mixture was kept at 160 °C under reduced pressure until an acid number of 14 mg KOH/g was obtained. The overall reaction time is 7 hours. The analytical data of the product obtained are summarized in table 1.

### Comparative example 5:

Synthesis of a hyperbranched polyester, modified with a linear C16/18 carboxylic acid and a branched C18 carboxylic acid (molar ratio 0.25 : 0.75)

The synthesis was carried out in the same manner as in comparative example 6, except that the molar ratio of the linear C16/18 carboxylic acid to the branched C18 carboxylic acid was 0.25 : 0.75.

The analytical data of the product obtained are summarized in table 1.

### Comparative Example 6

Synthesis of a hyperbranched polyester, modified with a linear C16/18 carboxylic acid and a branched C18 carboxylic acid (molar ratio 1:1)

### Step 1: Synthesis of the hyperbranched polyester core

0.94 g trimethylolpropane (0.0070 mol), 187.7 g dimethylolpropionic acid (1.4 mol), 37.4 g (0.0093 mol) polypropylenglycole having an M_{w} of 4000 g/mol (Pluriol^{®} P4000) and 0.72 g methanesulfonic acid (0.0075 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 24 mg KOH/g was reached.

### Step 2: Modification with a mixture of a linear C16/18 carboxylic acid and a branched C18 carboxylic acid

165.9 g (0.6 mol) of a linear C16/18 carboxylic acid (Wilfarin^{®} SA1865) and 177.3 g (0.6 mol) of a branched C18 carboxylic acid (Prisorine^{®} 3505) and were added to the reaction mixture. The reaction mixture was kept at 160 °C under reduced pressure until an acid number of 14 mg KOH/g was obtained. The overall reaction time is 9 hours.

The analytical data of the product obtained are summarized in table 1.

### Comparative example 7

Synthesis of a hyperbranched polyester, modified with a linear C16/18 carboxylic acid and a branched C18 carboxylic acid (molar ratio 0.75 : 0.25)

The synthesis was carried out in the same manner as in comparative example 6, except that the molar ratio of the linear C16/18 carboxylic acid to the branched C18 carboxylic acid was 0.75 : 0.25.

The analytical data of the product obtained are summarized in table 1.

### Comparative Example 8:

Synthesis of a hyperbranched polyester, modified with a linear C22 carboxylic acid and a branched C18 carboxylic acid (molar ratio 0.25 : 0.75)

### Step 1: Synthesis of the hyperbranched polyester core

0.94 g trimethylolpropane (0.0070 mol), 187.7 g dimethylolpropionic acid (1.4 mol), 37.4 g (0.0093 mol) polypropylenglycole having an M_{w} of 4000 g/mol (Pluriol^{®} P4000) and 0.72 g methanesulfonic acid (0.0075 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 21 mg KOH/g was reached.

### Step 2: Modification with a linear C22 carboxylic acid and a branched C18 carboxylic acid

263.0 g Prisorine 3505 (0.9 mol) and 100.2 g Palmera A8522 (0.3 mol) were added to the reaction mixture. The reaction mixture was kept at 160 °C under reduced pressure until an acid number of 13 mg KOH/g was obtained. The overall reaction time is 8 hours.

The analytical data of the product obtained are summarized in table 1.

### Example 1:

Synthesis of a hyperbranched polyester, modified with a linear C22 carboxylic acid and a branched C18 carboxylic acid (molar ratio 1 : 1)

### Step 1: Synthesis of the hyperbranched polyester core

0.94 g trimethylolpropane (0.0070 mol), 187.7 g dimethylolpropionic acid (1.4 mol), 37.4 g (0.0093 mol) polypropylenglycole having an M_{w} of 4000 g/mol (Pluriol^{®} P4000) and 0.72 g methanesulfonic acid (0.0075 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 21 mg KOH/g was reached.

### Step 2: Modification with a linear C22 carboxylic acid and a branched C18 carboxylic acid

200.4 g (0.6 mol) of a linear C22 carboxylic acid (Palmera^{®} A8522) and 175.3 g (0.6 mol) of a branched C18 carboxylic acid (Prisorine^{®} 3505) and were added to the reaction mixture. The reaction mixture was kept at 160 °C under reduced pressure until an acid number of 15 mg KOH/g was obtained. The overall reaction time is 9 hours.

The analytical data of the product obtained are summarized in table 1.

### Example 2:

Synthesis of a hyperbranched polyester, modified with a linear C22 carboxylic acid and a branched C18 carboxylic acid (molar ratio 0.75 : 0.25)

The synthesis was carried out in the same manner as in example 1, except that the molar ratio of the linear C22 carboxylic acid to the branched C18 carboxylic acid was 0.75 : 0.25.

The analytical data of the product obtained are summarized in table 1.

### Example 3:

Synthesis of a hyperbranched polyester, modified with a linear C22 carboxylic acid and a branched C18 carboxylic acid (molar ratio 0.83 : 0.17)

The synthesis was carried out in the same manner as in example 1, except that the molar ratio of the linear C22 carboxylic acid to the branched C18 carboxylic acid was 0.83 : 0.17.

The analytical data of the product obtained are summarized in table 1.

### Example 4:

Synthesis of a hyperbranched polyester, modified with a linear C22 carboxylic acid and a branched C18 carboxylic acid (molar ratio 0.92 : 0.08)

The synthesis was carried out in the same manner as in example 4, except that the molar ratio of the linear C22 carboxylic acid to the branched C18 carboxylic acid was 0.92 : 0.08.

The analytical data of the product obtained are summarized in table 1.

### Example 5:

Synthesis of a hyperbranched polyester, modified with a linear C16 to C22 carboxylic acid and a branched C18 carboxylic acid (molar ratio 0.75 : 0.25)

### Step 1: Synthesis of the hyperbranched polyester core

0.94 g trimethylolpropane (0.0070 mol), 187.7 g dimethylolpropionic acid (1.4 mol), 37.4 g (0.0093 mol) polypropylenglycole having an M_{w} of 4000 g/mol (Pluriol^{®} P4000) and 0.72 g methanesulfonic acid (0.0075 mol) were added to a 2 L reaction vessel equipped with N₂ inlet, thermometer, stirrer and distillation column.

The reaction mixture was slowly heated with the help of an oil bath to a temperature of 160°C. The reaction mixture was kept at 160 °C under reduced pressure until an acid number of 20 mg KOH/g was reached.

### Step 2: Modification with a mixture of a linear C16 to C22 carboxylic acid and a branched C18 carboxylic acid

274.5 g (0.9 mol) of a linear C16 to 22 carboxylic acid (Palmera^{®} BLC50) and 87.7 g (0.3 mol) of a branched C18 carboxylic acid (Prisorine^{®} 3505) and were added to the reaction mixture. The reaction mixture was kept at 160 °C under reduced pressure until an acid number of 15 mg KOH/g was obtained. The overall reaction time is 7 hours.

The analytical data of the product obtained are summarized in table 1.

In the following table 1, the samples prepared are summarized together with properties of the thus obtained modified polyesters.

The analysis was carried out in the following manner:

### Acid number

The acid number was determined according to DIN53402, 1990 and is provided as mg KOH per g of polymer.

### Molecular weights Mₙ and M_{w}

The weight average molecular weight Mw and number average molecular weight Mn were determined using gel permeation chromatography calibrated to a polystyrene standard

### Melting point

The melting point or the glass transition temperature (T_{g}) was determined using differential scanning calorimetry.

**Table 1: Analytical results of the samples synthesized**

| **Example No.** | **Fatty acid(s) used for step 2 (molar ratio)** | **Mₙ [mol/g]** | **M_{w} [mol/g]** | **Melting point [°C]** |
|---|---|---|---|---|
| C1 | C16/18 linear, saturated | 6275 | 16006 | 43.7 |
| C2 | C 22 linear, saturated | 7088 | 19270 | 65.0 |
| C3 | C16 - C 22 linear, saturated | 6824 | 17873 | 51.2 |
| C4 | C18, branched | 6425 | 10568 | -34.9 (Tg) |
| C5 | C 16/18 linear, saturated + C18 branched (1:1) | 5934 | 10617 | nd |
| C6 | C 16/18 linear, saturated + C18 branched (0.25 : 0.75) | 6228 | 10812 | nd |
| C7 | C 16/18 linear, saturated + C18 branched (0.75 : 0.25) | 6150 | 11926 | nd |
| C8 | C22 linear, saturated + C18 branched (0.25:0.75) | 6748 | 12425 | 32.6 |
| 1 | C22 linear, saturated + C18 branched (1:1) | 5395 | 12601 | 47.2 |
| 2 | C22 linear, saturated + C18 branched (0.75:0.25) | 6103 | 14186 | 57.2 |
| 3 | C22 linear, saturated + C18 branched (0.83 : 0.17) | 6457 | 13985 | 61.0 |
| 4 | C22 linear, saturated + C18 branched (0.92:0.08) | 6336 | 14885 | 63.6 |
| 5 | C16-22 linear, saturated + C18 branched (0.75 : 0.25) | 7388 | 13096 | 47.4 |

### Performance tests

Tests were carried out using the hydrophobically modified, hyperbranched polyesters as such, as well as solutions in a commercially available aromatic hydrocarbon solvent (Solvesso^{®} 150 ND, flashpoint 63°C, distillation range 175°C to 205°C, aromatics 95 % by weight).

### Test methods

### Crude oil

For the tests, a crude oil from the "Landau" oilfield in south-west Germany (Wintershall Holding GmbH).

The crude was homogenized at 158°F (70°C) for two hours within the sample container. The density and API gravity were determined with a DMA 4500 from Anton Paar. The Wax Appearance Temperature (WAT) was measured with a Differential Scanning Calorimeter (DSC) 823 from Mettler Toledo using a temperature ramp of -3°C/min. The No Flow Point (NFP) was determined by using a Pour Point Tester (PPT 45150) from PSL Systemtechnik GmbH.

Its properties are the following:

| API-Grade | Density [g/cm³] | Wax appearance 23 Temperature [°C] | No Flow point [°C] | Pour point [°C] |
|---|---|---|---|---|
| 36,75 | 0,8402 | 51 | 22.6 | 24 |

### Pour Point and No Flow Point

The pour point (PP) was measured in Landau oil at a polymer concentration of 1000 ppm. The Pour Point was determined by using the equipment from PSL Systemtechnik GmbH Pour Point Tester model 45150. The operation principle is based on the rotational method ASTM D5985. After inserting a sample to the Pour Point tester, the sample is heated to 70°C and then cooled down until the Pour Point is reached. Simultaneously, the sample cup is slowly rotated (0,1 rpm). A temperature sensor inserted in the sample measures its temperature and at the same time serves as a pendulum. When the sample gets more viscous, the temperature sensor is deflected by the rotational move. When the deflection is high enough, the upper end of the temperature sensor triggers a signal by crossing a light barrier. This indicate that the Pour Point is reached. After that, the sample is heated again up to 70°C. The result given by the equipment is a non-flow point of the oil. In order to obtain the ASTM pour point value, the non-flow point is increased to the next higher value dividable by 3.

### Viscosity

Anton Paar MCR 305 Oscillation; Shear deformation: 1%; Frequency: 1Hz for solutions of the products in hydrocarbons. For the polymers without solvent, the shear rate was 50 Hz.

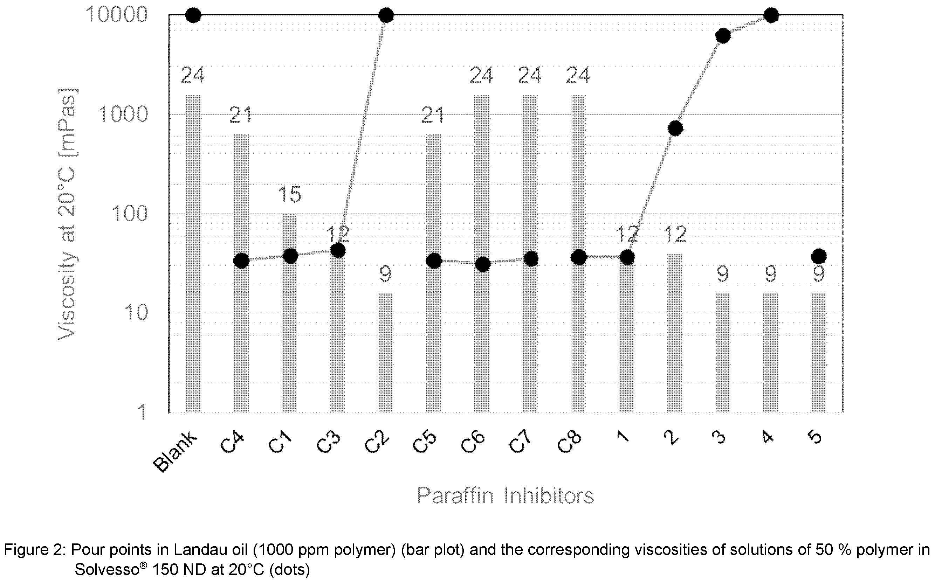

The data are summarized in tables 2 and 3. Figure 2 shows the resultant pour points in Landau oil (1000 ppm) together with the viscosities of solutions of the polymers (50 wt. %) in Solvesso^{®} 150 ND at 20°C.

**Table 2: Properties of the samples tested**

| **Sample No.** | **Fatty acid(s) used for step 2 (molar ratio)** | **Concentration in solvent (Solvesso^{®} 150 ND)** | **DSC Melting Point [°C]** | **Visko@20°C [mPas]** | **No Flow Point In crude oil [°C]** | **Pour point in crude oil [°C]** | **Δ No Flow Point between sample and crude oil** |
|---|---|---|---|---|---|---|---|
| C1 | C16/18 linear | 50 wt. % | 13.45 | 38,1 | 13.8 | 15 | 8.8 |
| C4 | C18, branched | No solvent | No peak detected | 9881.7 | | | |
| C4 | C18, branched | 50 wt. % | No peak detected | 33.8 | 19.4 | 21 | 3.2 |
| C5 | C 16/18 linear, saturated + C18 branched (0.25 : 0.75) | No solvent | -5,03 | > 10.000 | | | |
| C5 | C 16/18 linear, saturated + C18 branched (0.25 : 0.75) | 50 wt. % | -21,68 | 33,7 | 20.9 | 21 | 1.7 |
| C6 | C 16/18 linear, saturated + C18 branched (1:1) | No solvent | 24,87 | 9879,7 | | | |
| C6 | C 16/18 linear, saturated + C18 branched (1:1) | 50 wt. % | -4,96 | 31,7 | 22.6 | 24 | 0 |
| C7 | C 16/18 linear, saturated + C18 branched (0.75 : 0.25) | No solvent | 33,79 | > 10.000 | | | |
| C7 | C 16/18 linear, saturated + C18 branched (0.75 : 0.25) | 50 wt. % | 6,82 | 35,7 | 22.6 | 24 | 0 |

**Tab. 3: Properties of the samples tested**

| **Sample No.** | **Fatty acid(s) used for step 2 (molar ratio)** | **Concentration in solvent (Solvesso^{®} 150 ND)** | **DSC Melting Point [°C]** | **Visko@20°C [mPas]** | **No Flow Point In crude oil [°C]** | **Pour point in crude oil [°C]** | **Δ No Flow Point between sample and crude oil** |
|---|---|---|---|---|---|---|---|
| C2 | C22 linear | 50 wt. % | 36.76 | > 10.000 | 6.3 | 9 | 16.3 |
| C3 | C16-22 linear, saturated | 50 wt. % | 23,31 | 43,5 | 10,4 | 12 | 12,2 |
| C4 | C18, branched | 50 wt. % | No peak | 33.8 | 19.4 | 21 | 3.2 |
| C8 | C22 linear, saturated + C18 branched (0.25:0.75) | No solvent | 32.74 | > 10.000 | | | |
| C8 | C22 linear, saturated + C18 branched (0.25:0.75) | 50 wt. % | -22.27 | 36.8 | 21.7 | 24 | 0.9 |
| 1 | C22 linear, saturated + C18 branched (1:1) | No solvent | 46.09 | > 10.000 | | | |
| 1 | C22 linear, saturated + C18 branched (1:1) | 50 wt. % | 17.28 | 36.8 | 10.9 | 12 | 11.7 |
| 2 | C22 linear, saturated + C18 branched (0.75 : 0.25) | No solvent | 54.49 | > 10.000 | | | |
| 2 | C22 linear, saturated + C18 branched (0.75 : 0.25) | 50 wt. % | 31 | 735.1 | 9.5 | 12 | 13.1 |
| 3 | C22 linear, saturated + C18 branched (0.83 : 0.17) | No solvent | 57.13 | > 10.000 | | | |
| 3 | C22 linear, saturated + C18 branched (0.83 : 0.17) | 50 wt. % | 32.34 | 6288.2 | 7.8 | 9 | 14.8 |

**Tab. 3 Properties of the samples tested (cont.)**

| **Sample No.** | **Fatty acid(s) used for step 2 (molar ratio)** | **Concentration in solvent (Solvesso^{®} 150 ND)** | **DSC Melting Point [°C]** | **Visko@20°C [mPas]** | **No Flow Point In crude oil [°C]** | **Pour point in crude oil [°C]** | **Δ No Flow Point between sample and crude oil** |
|---|---|---|---|---|---|---|---|
| 4 | C22 linear, saturated + C18 branched (0.92:0.08) | No solvent | 58.73 | > 10.000 | | | |
| 4 | C22 linear, saturated + C18 branched (0.92:0.08) | 50 wt. % | 34.06 | > 10.000 | 7.2 | 9 | 15.4 |
| 5 | C16-22 linear, saturated + C18 branched (0.75 : 0.25) | 50 wt. % | 15.68 | 37.3 | 7.7 | 9 | 14.9 |

Table 2 shows the results of performance tests in which a linear C16/C18 carboxylic acids or combinations of a linear C16/C18 carboxylic acid with a branched C18 carboxylic acid were used.

Comparative example C1 shows a sample in which only the linear C16/C18 carboxylic acid was used for modification. A 50 wt. % solution in a high boiling hydrocarbon liquid (Solvesso^{®} 150 ND) reduces the pour point from 24 °C to 15°C and the no flow point by 8.8°C from 22.6°C to 13.8°C. So, the polymer acts as a pour point depressant but its performance is only moderate. The melting point of the solution is 13.45°C, which is too much if the use of the formulation in cold regions is envisaged.

Substituting the linear C16/C18 carboxylic acid completely by a branched C18 carboxylic acid (comparative example C4) yields a formulation in 50 wt. % of hydrocarbons which remains liquid even at very low temperatures. So, regarding this point only, it were an excellent product for use in cold environments. However, there is no longer any significant reduction of the pour point of the crude oil.

In comparative examples C5, C6, and C7, mixtures of the linear C16/C18 carboxylic acid and the branched C18 carboxylic acid were used with increasing amount of the branched carboxylic acid, the melting point decreased, however, all of the samples showed no performance as pour point depressant.

Table 3 shows the results of performance tests in which a linear C22 carboxylic acids or combinations of a linear C22 carboxylic acid with a branched C18 carboxylic acid were used.

In comparative example C2, a linear C22 carboxylic acid was used for modification. The sample has an excellent performance as pour point depressant (far better than with the C16/18 carboxylic acid), however, the melting point was nearly 37°C which is insufficient, even when not working in cold environments.

In comparative example C3, a linear C16/22 carboxylic acid was used for modification.

In comparative example C8 and examples 1 to 4, mixtures of the linear C22 carboxylic acid and the branched C18 carboxylic acid were used for modification. The proportion of the two components were varied. In comparative example C8, the proportion linear / branched was 0.25 / 0.75. The low temperature properties were excellent, but the performance as pour point depressant poor. A proportion linear / branched of 1 : 1 (example 1) yields a significant reduction of the melting point and still has a good performance as poor point depressant.

Figure 2 summarizes the findings of the pour point measurements together with the viscosity measurements.

## Claims

1. Hydrophobically modified, hyperbranched polyesters, obtainable by the following process:
(a) reacting a mixture comprising at least a polyol (A) comprising at least 3 hydroxy groups and a molecule (B) comprising one carboxylic acid group and at least two hydroxy groups, by heating the mixture to a temperature of at least 100°C, wherein the molar ratio (B) : (A) is from 1000 : 1 to 10 : 1, thereby obtaining a hyperbranched polyester comprising terminal hydroxy groups; and
(b) Reacting the mixture obtained in course of step (a) with a mixture of monocarboxylic acids (D) by heating to a temperature of at least 100°C, thereby esterifying at least a part of the terminal OH-groups of the polyester obtained in course of step (a), wherein the monocarboxylic acids (D) comprise
(D1) at least one linear, saturated aliphatic carboxylic acid, wherein at least one of the carboxylic acids (D1) comprises at least 20 carbon atoms, and
(D2) at least one branched, saturated aliphatic carboxylic acid (D2) comprising at least 4 carbon atoms,
wherein the molar ratio (D1) : (D2) is from 1 : 2 to 15 : 1.

2. Polyesters according to claim 1, wherein the reaction mixture in step (a) comprises additionally a diol (C) having a molecular weight of at least 100 g/mol, wherein the molar ratio (B) : (C) is from 1000 : 1 to 10 : 1.

3. Polyesters according to any of claims 1 or 2, wherein the reaction in course of step (a) is carried out in the presence of at least one acid.

4. Polyesters according to any of claims 1 to 3, wherein at least one of the carboxylic acids (D1) comprises at least 22 carbon atoms.

5. Polyesters according to any of claims 1 to 4, wherein the molar ratio (D1) : (D2) is from 1 : 1 to 12 : 1.

6. Polyesters according to any of claims 1 to 5, wherein the temperature in course of step (a) is from 120°C to 200°C.

7. Polyesters according to any of claims 1 to 6, wherein the amount of carboxylic acids (D1) comprising at least 20 carbon atoms is at least 50 % by weight, relating to the total of all carboxylic acids (D1).

8. Polyesters according to any of claims 1 to 6, wherein the carboxylic acids (D1) comprise a mixture of carboxylic acids having 20, 22, and 24 carbon atoms.

9. Polyesters according to any of claims 1 to 8, wherein the branched, saturated aliphatic carboxylic acid(s) (D2) comprise at least 12 carbon atoms.

10. Formulation of polyesters comprising at least
• a hydrocarbon or a mixture of different hydrocarbons having a boiling point of at least 100°C, and
• a hydrophobically modified, hyperbranched polyester according to any of claims 1 to 9.

11. Formulation according to claim 9, wherein the amount of the hydrocarbon or the hydrocarbon mixture is from 40 % to 90 % by weight, and the amount of the polyester is from 10 % to 75% by weight, in each case relating to the total of all components of the formulation.

12. Use of a hydrophobically modified, hyperbranched polyester according to any of claims 1 to 8 as pour point depressant for crude oil by adding at least a hydrophobically modified, hyperbranched polyester according to claims 1 to 8 to the crude oil.

13. Use according to claim 12, wherein a formulation of the hydrophobically modified, hyperbranched polyesters is used, wherein the formulation comprises at least
• a hydrocarbon or a mixture of different hydrocarbons having a boiling point of at least 100°C, and
• a hydrophobically modified, hyperbranched polyester according to any of claims 1 to 9.

14. Use according to claims 12 or 13, wherein the amount of the hydrophobically modified, hyperbranched polyesters is 50 to 3000 ppm based on the crude oil.

15. Use of a hydrophobically modified, hyperbranched polyester according to any of claims 1 to 8 as wax inhibitor for crude oil by adding at least a hydrophobically modified, hyperbranched polyester according to claims 1 to 8 to the crude oil.

## Patentansprüche

1. Hydrophob modifizierte, hyperverzweigte Polyester, erhältlich nach folgendem Verfahren:
(a) Umsetzen einer Mischung, die mindestens ein Polyol (A), das mindestens 3 Hydroxygruppen enthält, und ein Molekül (B), das eine Carbonsäuregruppe und mindestens zwei Hydroxygruppen enthält, umfasst, durch Erhitzen der Mischung auf eine Temperatur von mindestens 100°C, wobei das Molverhältnis (B) : (A) 1000 : 1 bis 10 : 1 beträgt, wodurch ein hyperverzweigter Polyester erhalten wird, der terminale Hydroxygruppen enthält; und
(b) Umsetzen der im Zuge von Schritt (a) erhaltenen Mischung mit einer Mischung von Monocarbonsäuren (D) durch Erhitzen auf eine Temperatur von mindestens 100°C, wodurch mindestens ein Teil der terminalen OH-Gruppen des im Zuge von Schritt (a) erhaltenen Polyesters verestert wird, wobei die Monocarbonsäuren (D) umfassen
(D1) mindestens eine lineare, gesättigte aliphatische Carbonsäure, wobei mindestens eine der Carbonsäuren (D1) mindestens 20 Kohlenstoffatome aufweist, und
(D2) mindestens eine verzweigte, gesättigte aliphatische Carbonsäure (D2) mit mindestens 4 Kohlenstoffatomen,
wobei das Molverhältnis (D1) : (D2) 1 : 2 bis 15 : 1 beträgt.

2. Polyester gemäß Anspruch 1, wobei die Reaktionsmischung in Schritt (a) zusätzlich ein Diol (C) mit einem Molekulargewicht von mindestens 100 g/mol enthält, wobei das Molverhältnis (B) : (C) 1000 : 1 bis 10 : 1 beträgt.

3. Polyester gemäß einem der Ansprüche 1 oder 2, wobei die Reaktion im Verlauf von Schritt (a) in Gegenwart mindestens einer Säure durchgeführt wird.

4. Polyester gemäß einem der Ansprüche 1 bis 3, wobei mindestens eine der Carbonsäuren (D1) mindestens 22 Kohlenstoffatome aufweist.

5. Polyester gemäß einem der Ansprüche 1 bis 4, wobei das Molverhältnis (D1) : (D2) 1 : 1 bis 12 : 1 beträgt.

6. Polyester gemäß einem der Ansprüche 1 bis 5, wobei die Temperatur im Verlauf von Schritt (a) 120°C bis 200°C beträgt.

7. Polyester gemäß einem der Ansprüche 1 bis 6, wobei der Anteil an Carbonsäuren (D1) mit mindestens 20 Kohlenstoffatomen mindestens 50 Gew.-%, bezogen auf die Summe aller Carbonsäuren (D1), beträgt.

8. Polyester gemäß einem der Ansprüche 1 bis 6, wobei die Carbonsäuren (D1) ein Gemisch aus Carbonsäuren mit 20, 22 und 24 Kohlenstoffatomen umfassen.

9. Polyester gemäß einem der Ansprüche 1 bis 8, wobei die verzweigte(n), gesättigte aliphatische Carbonsäure(n) (D2) mindestens 12 Kohlenstoffatome aufweisen.

10. Formulierung von Polyestern, bestehend aus mindestens
• ein Kohlenwasserstoff oder ein Gemisch verschiedener Kohlenwasserstoffe mit einem Siedepunkt von mindestens 100 °C und
• ein hydrophob modifizierter, hyperverzweigter Polyester gemäß einem der Ansprüche 1 bis 9.

11. Formulierung nach Anspruch 9, wobei die Menge des Kohlenwasserstoffs oder des Kohlenwasserstoffgemisches 40 bis 90 Gew.-% und die Menge des Polyesters 10 bis 75 Gew.-% beträgt, jeweils bezogen auf die Summe aller Komponenten der Formulierung.

12. Verwendung eines hydrophob modifizierten, hyperverzweigten Polyesters gemäß einem der Ansprüche 1 bis 8 als Pourpoint-Depressant für Rohöl durch Zugabe mindestens eines hydrophob modifizierten, hyperverzweigten Polyesters gemäß den Ansprüchen 1 bis 8 zum Rohöl.

13. Verwendung nach Anspruch 12, wobei eine Formulierung der hydrophob modifizierten, hyperverzweigten Polyester verwendet wird, wobei die Formulierung mindestens umfasst
• ein Kohlenwasserstoff oder ein Gemisch verschiedener Kohlenwasserstoffe mit einem Siedepunkt von mindestens 100 °C und
• ein hydrophob modifizierter, hyperverzweigter Polyester gemäß einem der Ansprüche 1 bis 9.

14. Verwendung nach den Ansprüchen 12 oder 13, wobei die Menge der hydrophob modifizierten, hyperverzweigten Polyester 50 bis 3000 ppm bezogen auf das Rohöl beträgt.

15. Verwendung eines hydrophob modifizierten, hyperverzweigten Polyesters gemäß einem der Ansprüche 1 bis 8 als Wachsinhibitor für Rohöl durch Zugabe mindestens eines hydrophob modifizierten, hyperverzweigten Polyesters gemäß den Ansprüchen 1 bis 8 zum Rohöl.

## Revendications

1. Polyesters hyperramifiés modifiés hydrophobiquement, pouvant être obtenus par le procédé suivant :
(a) faire réagir un mélange comprenant au moins un polyol (A) comprenant au moins 3 groupes hydroxy et une molécule (B) comprenant un groupe acide carboxylique et au moins deux groupes hydroxy, en chauffant le mélange à une température d'au moins 100°C, dans lequel le rapport molaire (B) : (A) est de 1000 : 1 à 10 : 1, ce qui permet d'obtenir un polyester hyperramifié comprenant des groupes hydroxy terminaux ; et
(b) Réaction du mélange obtenu au cours de l'étape (a) avec un mélange d'acides monocarboxyliques (D) par chauffage à une température d'au moins 100°C, estérifiant ainsi au moins une partie des groupes OH terminaux du polyester obtenu au cours de l'étape (a), dans lequel les acides monocarboxyliques (D) comprennent
(D1) au moins un acide carboxylique aliphatique saturé linéaire, dans lequel au moins l'un des acides carboxyliques (D1) comprend au moins 20 atomes de carbone, et
(D2) au moins un acide carboxylique aliphatique ramifié, saturé (D2) comprenant au moins 4 atomes de carbone,
dans lequel le rapport molaire (D1) : (D2) est de 1 : 2 à 15 : 1.

2. Polyesters selon la revendication 1, dans lesquels le mélange réactionnel de l'étape (a) comprend en outre un diol (C) ayant un poids moléculaire d'au moins 100 g/mol, dans lequel le rapport molaire (B) : (C) est de 1000 : 1 à 10 : 1.

3. Polyesters selon l'une quelconque des revendications 1 ou 2, dans lesquels la réaction au cours de l'étape (a) est effectuée en présence d'au moins un acide.

4. Polyesters selon l'une quelconque des revendications 1 à 3, dans lesquels au moins un des acides carboxyliques (D1) comprend au moins 22 atomes de carbone.

5. Polyesters selon l'une quelconque des revendications 1 à 4, dans lesquels le rapport molaire (D1) : (D2) est de 1 : 1 à 12 : 1.

6. Polyesters selon l'une quelconque des revendications 1 à 5, dans lesquels la température au cours de l'étape (a) est de 120°C à 200°C.

7. Polyesters selon l'une quelconque des revendications 1 à 6, dans lesquels la quantité d'acides carboxyliques (D1) comprenant au moins 20 atomes de carbone est d'au moins 50 % en poids, par rapport au total de tous les acides carboxyliques (D1).

8. Polyesters selon l'une quelconque des revendications 1 à 6, dans lesquels les acides carboxyliques (D1) comprennent un mélange d'acides carboxyliques ayant 20, 22 et 24 atomes de carbone.

9. Polyesters selon l'une quelconque des revendications 1 à 8, dans lesquels le ou les acides carboxyliques aliphatiques saturés ramifiés (D2) comprennent au moins 12 atomes de carbone.

10. Formulation de polyesters comprenant au moins
• un hydrocarbure ou un mélange de différents hydrocarbures ayant un point d'ébullition d'au moins 100°C, et
• un polyester hyperramifié modifié de manière hydrophobe selon l'une quelconque des revendications 1 à 9.

11. Formulation selon la revendication 9, dans laquelle la quantité de l'hydrocarbure ou du mélange d'hydrocarbures est de 40 % à 90 % en poids, et la quantité du polyester est de 10 % à 75 % en poids, dans chaque cas par rapport au total de tous les composants de la formulation.

12. Utilisation d'un polyester hyperramifié modifié hydrophobement selon l'une quelconque des revendications 1 à 8 comme abaisseur de point d'écoulement pour le pétrole brut en ajoutant au moins un polyester hyperramifié modifié hydrophobement selon les revendications 1 à 8 au pétrole brut.

13. Utilisation selon la revendication 12, dans laquelle une formulation de polyesters hyperramifiés modifiés de manière hydrophobe est utilisée, dans laquelle la formulation comprend au moins
• un hydrocarbure ou un mélange de différents hydrocarbures ayant un point d'ébullition d'au moins 100°C, et
• un polyester hyperramifié modifié de manière hydrophobe selon l'une quelconque des revendications 1 à 9.

14. Utilisation selon les revendications 12 ou 13, dans laquelle la quantité de polyesters hyperramifiés modifiés de manière hydrophobe est de 50 à 3 000 ppm par rapport au pétrole brut.

15. Utilisation d'un polyester hyperramifié modifié hydrophobement selon l'une quelconque des revendications 1 à 8 comme inhibiteur de cire pour pétrole brut en ajoutant au moins un polyester hyperramifié modifié hydrophobement selon les revendications 1 à 8 au pétrole brut.
